# EUROPEAN PATENT APPLICATION

(11) **EP 2 845 800 A1**
(43) Date of publication of application: **11.03.2015**
(21) Application number: 13275198.3
(22) Date of filing: 04.09.2013
(51) Int. Cl.: B64C 39/02, B63B 35/00

(54) **Apparatus and method for launching an unmanned aerial vehicle**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is apparatus (10, 10') for launching an unmanned aerial vehicle (20), for example from a vehicle (250) submerged beneath the surface (260) of a body of water (270). The apparatus (10, 10') comprises: an envelope (30) configured to receive and, at least to some extent, retain therewithin a lighter than air, gaseous substance; and coupling means operable to switch between a first state in which the coupling means couples the envelope (30) to the unmanned aerial vehicle (20) and a second state in which the unmanned aerial vehicle (20) is free to move away from the envelope (30). The apparatus (10, 10') is an unmanned apparatus.

## Description

### FIELD OF THE INVENTION

The present invention relates to an apparatus and method for launching unmanned aerial vehicles (UAV), and particularly relates to such an apparatus and method for launching these vehicles from underwater platforms.

### BACKGROUND

Conventional UAV may be launched from land or a surface platform, for example using a catapult device, or from an airborne platform, for example using a sonobuoy. Such launch mechanisms tend to be readily apparent to an observing party. Also, such launch mechanisms tend to be relatively restrictive, especially when applied to a submersible platform such as a submarine. Typically, a submarine would need to surface prior to launching a UAV.

### SUMMARY OF THE INVENTION

In a first aspect, the present invention provides apparatus for launching an unmanned aerial vehicle comprising: an envelope configured to receive and, at least to some extent, retain therewithin a lighter than air, gaseous substance; and coupling means operable to switch between a first state in which the coupling means couples the envelope to the unmanned aerial vehicle and a second state in which the unmanned aerial vehicle is free to move away from the envelope. The apparatus is an unmanned apparatus.

The coupling means may comprise a shroud assembly, the shroud assembly comprising a shroud configured to house, at least to some extent, the unmanned aerial vehicle.

The apparatus may further comprise tethering means configured to couple the envelope to the shroud assembly.

The shroud may comprise a main body portion releasably connected to an end portion by a release mechanism.

The release mechanism may be operable to release the main body portion from the end portion, thereby switching the coupling means from the first state to the second state.

The apparatus may further comprise an unmanned aerial vehicle housed, at least to some extent, within the shroud.

The coupling means may comprise tethering means configured to releasably couple the envelope to the unmanned aerial vehicle.

The apparatus may further comprising an unmanned aerial vehicle coupled (e.g. directly connected), by the tethering means, to the envelope.

The coupling means may be configured to switch from the first state and to the second state in response to the apparatus attaining a predetermined altitude.

The coupling means may comprise a barometric switch for switching the coupling means from the first state to the second state.

The coupling means may comprise a timer for switching the coupling means from the first state to the second state in response to a threshold time period elapsing.

The apparatus may further comprise a gas reservoir in fluid communication with the envelope and configured to dispense gas thereto.

The apparatus may further comprise gas generation means, the gas generation means having a mechanism configured to effect combination of two or more materials, the two or more materials being materials that, when combined together, react so as to produce a lighter-than-air gaseous fluid. Alternatively, the apparatus may be configured to receive gas from a remotely located source.

The apparatus may further comprise a switch configured to initiate dispensing of the gas in to the envelope. Transfer of gas may be enabled by actuation of a valve. The switch may be a switch selected from the group of switches consisting of a manually activated switch, a timer switch, and a barometric switch.

By providing the apparatus, a UAV may be launched from a submerged location from an underwater platform without the need for the platform to come to the surface of the water. Consequently, visibility of the presence and activities of the platform tend to be reduced. Additionally, the need for disruption of the mission of the underwater platform tends to be significantly reduced as the vessel can remain below the surface of the water throughout deployment of the apparatus.

By using an inflatable envelope to effect launch of the UAV a quiet deployment of a UAV tends to be achievable. Such a UAV deployment tends to be less detectable than conventional deployment methods. Furthermore, when the deployment is undertaken from a marine vessel, especially, a submerged marine vessel, less disruption to the mission of the vessel tends to be experienced.

The apparatus may be jettisoned from a marine vehicle into a body of water from either a surface location or a submerged location. Alternatively, the apparatus may be deployed from a land based entity (e.g. a land-based vehicle or building) or from the ground or subterranean location.

In a further aspect, the present invention provides a method of launching an unmanned aerial vehicle, comprising the steps of: providing an envelope coupled, by coupling means, to the unmanned aerial vehicle; inflating the envelope with a lighter-than-air, gaseous substance such that the envelope and the unmanned aerial vehicle are conveyed from the surface of the Earth; and subsequently releasing, by the coupling means, from the envelope, the unmanned aerial vehicle such that the unmanned aerial vehicle is free to move away from the envelope. The envelope and the coupling means are an unmanned apparatus.

The method may comprise deploying a shroud having a UAV releasably retained therewithin. The shroud may be associated with the envelope by a tethering means.

The releasing step may comprise discarding a portion of the shroud to thereby release the UAV.

The releasing step may comprise separating the UAV from the envelope to effect launch of the UAV. During the separating step, the UAV may fall from the envelope under the action of gravity. If tethered, the UAV may be parted from the envelope by severing means configured to sever the tether between the UAV and the envelope.

The releasing step may be initiated dependent upon an altitude attained as determined e.g. by a barometric sensor.

The releasing step may be initiated upon an elapsed time period e.g. as determined by a timing device.

The envelope and the UAV coupled to the envelope by the coupling means may be jettisoned from a marine vehicle (e.g. a submerged vessel such as a submarine) into a body of water. Inflating the envelope with a lighter than air, gaseous substance may cause the envelope and the UAV coupled to the envelope by the coupling means to be conveyed towards, and beyond, the surface of the body of water.

### BRIEF DESCRIPTION OF THE DRAWINGS

Embodiments of the invention will now be described in detail by way of example and with reference to the accompanying drawings having like reference numerals in which:
Figure 1 is a schematic illustration (not to scale) showing an apparatus for launching a UAV in a deployed state;
Figure 2 is a schematic illustration (not to scale) showing the apparatus in a pre-deployed state;
Figure 3 is a schematic illustration (not to scale) showing a further apparatus for launching a UAV; and
Figures 4a to 4e are schematic illustrations (not to scale) represent an embodiment of a deployment sequence for launching a UAV.

### DETAILED DESCRIPTION

The terminology "balloon" is used herein to refer to an envelope comprising a membrane, stretchable or otherwise, capable of retaining, at least to some extent, a gaseous fluid therewithin.

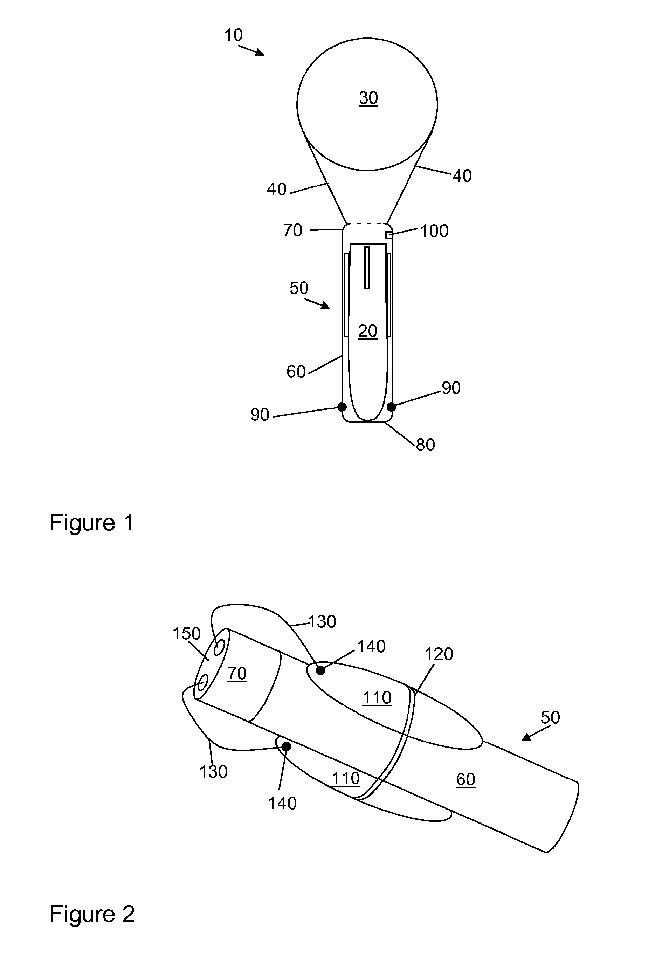

Figure 1 is a schematic illustration (not to scale) showing an embodiment of apparatus 10 for deploying an unmanned aerial vehicle (UAV) 20. Figure 1 is illustrated in a partly deployed configuration to more clearly illustrate some of the different components of the apparatus 10.

In this embodiment, a balloon 30 is releasably connected to the UAV 20 by tethers 40.

In this embodiment, the UAV 20 is enclosed by a shroud 50. The shroud 50 may be a sonobuoy, as conventionally used to launch a UAV from an airborne vehicle. The shroud 50 comprises a main portion 60, a proximal end cap 70 and a distal end cap 80. The distal end cap 80 is releasably connected to main portion 60 via a release mechanism 90. In this embodiment, the release mechanism 90 is automatically actuated, dependent upon a pressure experienced by the apparatus 10. This pressure is detected by a barometric sensor 100. For example, the release mechanism 90 may be actuated upon detection of a predetermined air pressure. In other embodiments, the release mechanism 90 is actuated in a different way, for example, after the after a predetermined time period has elapsed as measured by a timing device.

Figure 2 is a schematic illustration (not to scale) showing the apparatus 10 prior to deployment. In this embodiment, inflation gas is provided by an on board, dedicated gas source. One or more reservoirs 110 are directly attached to the main portion 60 of shroud 50. The reservoirs 110 are held in place by retaining bands 120.

The balloon 30 is located within proximal end cap 70 prior to inflation. Respective pipes 130 extend between the balloon 30 and each of the reservoirs 110. Each pipe 130 is connected to a corresponding reservoir 110 via a respective valve 140 for controlling flow of fluid therebetween. A portion 150 of proximal end cap 70 is detachable to enable the inflating balloon to be deployed as shown in Figure 1.

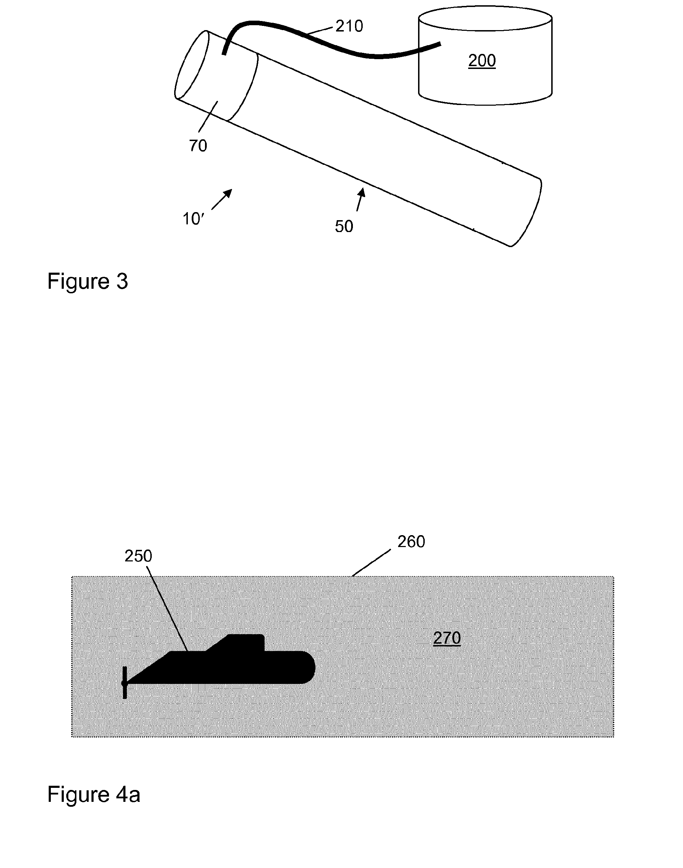

Figure 3 is a schematic illustration (not to scale) showing a further embodiment of apparatus for deploying an unmanned aerial vehicle (UAV) 20. This apparatus is hereinafter referred to as the "further apparatus" and is indicated in Figure 3 by the reference numeral 10'. The elements or components that are common to both the apparatus 10 and the further apparatus 10' are indicated herein using common reference numerals.

In this embodiment, the further apparatus 10' comprises a gas source 200 that is remote from the shroud 50. In this embodiment the gas source 200 is connected to the balloon 30 located within the proximal end cap 70 via a pipe or umbilical 210. The gas source 200 may be a remote store or canister of compressed gas located within a parent vehicle or, alternatively, it may be provided by an exhaust supply of hydrogen based fluid generated by the parent vehicle. The "parent vehicle" is a vehicle from which the further apparatus 10' is to be deployed. The parent vehicle may be, for example, a submarine.

In one embodiment, a mixture of compressed helium and air (so called "balloon gas") is used to inflate the balloon 30. For example, a balloon having a 3 metre diameter requires approximately 0.6 mol gas to achieve a pressure within the balloon of approximately 1 atm. In this embodiment, in its inflated state, the balloon 30 tends to be capable of lifting a 10kg mass. It follows that it is possible to use a different sized balloon with a similar result or to achieve greater lifting capacity. Alternative gases that could be used to inflate the balloon 30 include other gaseous fluids that have a mass lighter than air such as helium and hydrogen.

In either of the configurations shown in Figures 2 and 3, the gas may be generated by gas generation means as required rather than stored. An example appropriate gas generation means comprises a mechanism for combining two or more materials that, when they are brought into contact with one another, react to produce a lighter-than-air gas.

Figures 4a to 4e are schematic illustrations (not to scale) illustrating an embodiment of a process of deploying the apparatus 10. The further apparatus 10' may be deployed in a corresponding fashion.

Referring to Figure 4a, a submerged platform 250 serves as the parent vehicle which, in this example, is located in proximity to the surface 260 of a body of water 270. In this embodiment, the platform 250 is located at an exemplary 50 metre depth from the surface of the water 260.

In other embodiments, the platform 250 is located at a different appropriate depth. The shroud 50, balloon 30 and reservoirs 110 may be configured so as to withstand the pressure experienced at the depth at which the apparatus 10 is to be deployed.

Increasing the depth of the platform 250 from which the apparatus 10 is to be deployed may increases a risk that the balloon 30 collides with an obstacle on the way to the water surface 260 from the platform. The balloon may be configured, e.g. reinforced, so as to reduce the risk of any such collision damaging the balloon 30.

In some embodiments, means for detecting obstacles, such as a sonar system, may be used to detect the presence of an object with which the balloon 30 may collide. Actions may then be performed so as to reduce the lielihood of the balloon colliding with a detected obstacle, for example, deployment of the apparatus 10 may be delayed, or the platform 250 may move to a different location where the balloon's route to the surface 260 of the body of water 270 is not hindered by an obstacle.

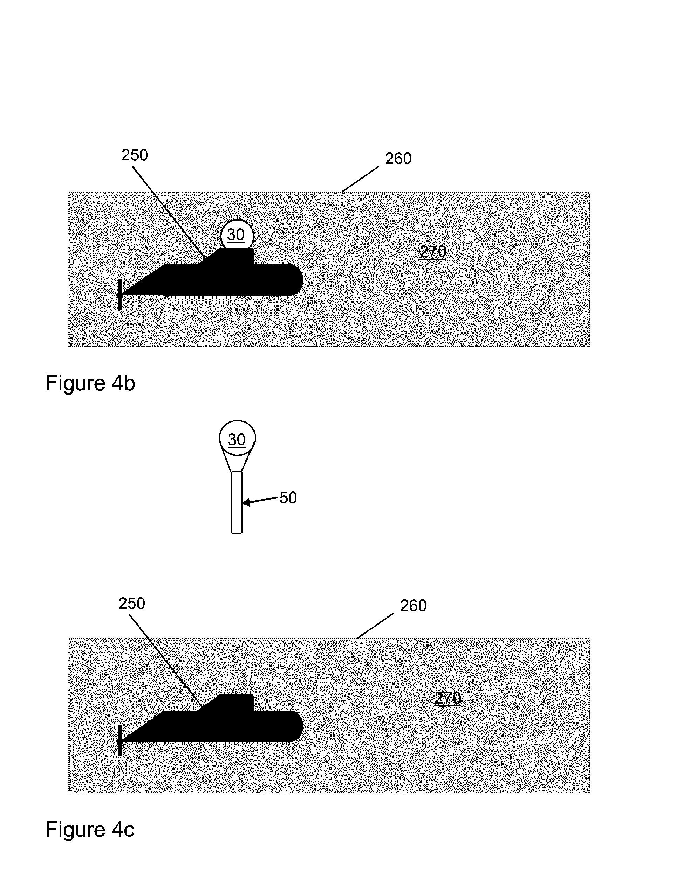

Referring to Figure 4b, there is shown a first stage of the deployment of the UAV 20 whereby the submerged platform 250 initiates a deployment sequence whereby the apparatus 10 is jettisoned from the platform 250. The balloon 30 is inflated once the apparatus 10 achieves a suitable clearance from the platform 250.

As discussed above, in this embodiment, the gas used to inflate the balloon 30 is sourced from a local gas supply associated with the balloon 30. One or more disposable reservoirs 110 are connected to, and deployed with, the shroud 50. The, or each, reservoir 110 is in fluid communication with the balloon 30 and transfer of gas is initiated to effect inflation thereof.

In embodiments in which the further apparatus 10' is deployed, the gas source 200 is a static gas supply associated with the parent vehicle 250. In this case, the apparatus 10' remains located in or proximate the parent vehicle 250 during inflation of the balloon 30 via umbilical pipe 210. After the balloon 30 has completed its inflation the umbilical 210 is severed, or otherwise detached, such that the remainder of apparatus 10' may pass towards the surface 260 of the body of water 270.

The platform 250 may store the apparatus 10 or further apparatus 10' in a launching tube. Alternatively, the apparatus 10 or further apparatus 10' may be be manually deployed by transferring the apparatus 10, 10' out of a hatch in the platform 250 and manually causing the balloon 30 to inflate, thus initiating launch of the UAV 20.

The balloon 30 is shown in the Figures as having a standard, substantially spherical shape by way of example only. Preferably, the shape of the balloon 30 is a vertically oriented cylindrical envelope. Also, preferably the balloon 30 is fabricated from a substantially inelastic membrane material. The use of such an envelope tends to provide that any external pressure fluctuation, such as sudden movement as the envelope transitions from being submerged in water to emerging into free air, minimises adverse effects on the external surface thereof. The use of such an envelope tends to be more stable than an envelope having a more reactive surface such as a conventional balloon having an elastic membrane. The use of a cylindrical shape tends to allow for ease of packaging/portability and subsequent ease of deployment.

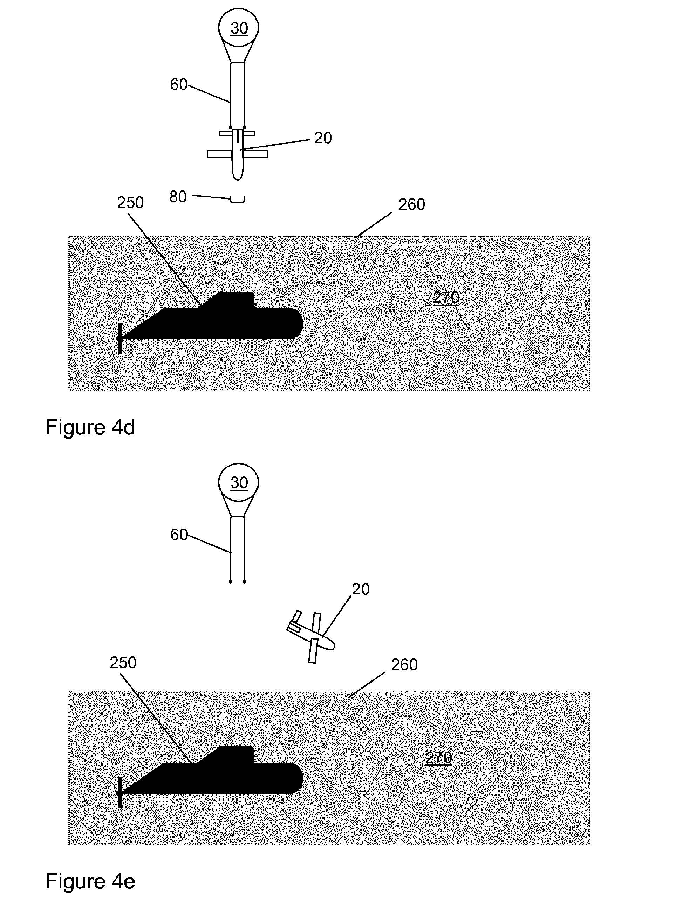

Referring to Figure 4c, the apparatus 10 has reached a predetermined height above the surface 260, for example, approximately 1500ft (457.2m). Upon reaching the predetermined altitude the barometric switch 100 triggers the next stage of deployment of the UAV 20. The barometric switch 100 causes actuation of the release mechanism 90 such that the distal end cap 80 is separated from the main portion 60 of the shroud 50 and gravity causes the end cap 80 of the shroud and the UAV 20, stored inside the shroud 50, to fall down towards the water 270 (see Figure 4d).

The UAV 20 may be secured within the shroud, in which case the securing means e.g. a further tether, may be severed so as to enable the UAV 20 to be released and thus exit the shroud 50.

Once the UAV 20 is clear of the shroud 50 and, therefore, no longer constrained by it, the wings, control surfaces and propeller of the UAV 20 fold out into a flying position. Also, at this stage operation, of the propeller of the UAV 20 is initiated. Thus, free, self-sustaining flight of the UAV 20 is achieved (see Figure 4e). In some embodiments, the UAV 20 is a glider whose free flight does not depend on a propeller or engine.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Apparatus (10, 10') for launching an unmanned aerial vehicle (20) comprising:
an envelope (30) configured to receive and, at least to some extent, retain therewithin a lighter than air, gaseous substance; and
coupling means operable to switch between a first state in which the coupling means couples the envelope (30) to the unmanned aerial vehicle (20) and a second state in which the unmanned aerial vehicle (20) is free to move away from the envelope (30); wherein
the apparatus (10, 10') is an unmanned apparatus.

2. Apparatus according to claim 1, wherein coupling means comprises a shroud assembly, the shroud assembly comprising a shroud (50) configured to house, at least to some extent, the unmanned aerial vehicle (20).

3. Apparatus according to claim 2 further comprising tethering means (40) configured to couple the envelope (30) to the shroud assembly.

4. Apparatus according to claim 2 or 3, wherein the shroud (50) comprises a main body portion (60) releasably connected to an end portion (80) by a release mechanism (90).

5. Apparatus according to claim 4, wherein the release mechanism (90) is operable to release the main body portion (60) from the end portion (80), thereby switching the coupling means from the first state to the second state.

6. Apparatus according to any of claims 2 to 5, the apparatus further comprising an unmanned aerial vehicle (20) housed, at least to some extent, within the shroud (50).

7. Apparatus according to claim 1, wherein coupling means comprises tethering means (40) configured to releasably couple the envelope (30) to the unmanned aerial vehicle (20).

8. Apparatus according to claim 7, the apparatus further comprising an unmanned aerial vehicle (20) coupled, by the tethering means (40), to the envelope (30).

9. Apparatus according to any of claims 1 to 8, wherein the coupling means is configured to switch from the first state and to the second state in response to the apparatus (10, 10') attaining a predetermined altitude.

10. Apparatus according to claim 9, wherein the coupling means comprises a barometric switch (100) for switching the coupling means from the first state to the second state.

11. Apparatus according to claim 1 to 10, wherein the coupling means comprises a timer for switching the coupling means from the first state to the second state in response to a threshold time period elapsing.

12. Apparatus according to any of claims 1 to 11 further comprising a gas reservoir (110, 200) in fluid communication with the envelope (30) and configured to dispense gas thereto.

13. Apparatus according to any of claims 1 to 12 further comprising gas generation means, the gas generation means having a mechanism configured to effect combination of two or more materials, the two or more materials being materials that, when combined together, react so as to produce a lighter-than-air gaseous fluid.

14. Apparatus according to claim 12 or claim 13 further comprising a switch configured to initiate dispensing of the gas in to the envelope (30).

15. A method of launching an unmanned aerial vehicle (20), comprising the steps of:
providing an envelope (30) coupled, by coupling means, to the unmanned aerial vehicle (20);
inflating the envelope (30) with a lighter-than-air, gaseous substance such that the envelope (30) and the unmanned aerial vehicle (20) are conveyed from the surface of the Earth; and
subsequently releasing, by the coupling means, from the envelope (30), the unmanned aerial vehicle (20) such that the unmanned aerial vehicle (20) is free to move away from the envelope (30); wherein
the envelope (30) and the coupling means are an unmanned apparatus (10, 10').
